# FASCICULE DE BREVET EUROPEEN

(11) **EP 0 727 289 B1**
(45) Date de publication et mention de la délivrance du brevet: **13.12.2000**
(21) Numéro de dépôt: 96400343.8
(22) Date de dépôt: 19.02.1996
(51) Int. Cl.: B25G 1/10

(54) **Ebauche de tournevis, tournevis et gamme de tournevis réalisés à partir d'une telle ébauche, et procédés de fabrication correspondants**
Schraubendreherrohling, Schraubendreher und Satz von Schraubendrehern, hergestellt aus einem solchen Rohling und Verfahren zu deren Herstellung
Blank for a screwdriver, screwdriver and set of screwdrivers manufactured starting from such a blank, and corresponding manufacturing methods

(30) Priorité: 20.02.1995 FR 9501935
(43) Date de publication de la demande: 21.08.1996
(73) Titulaire: BOST GARNACHE INDUSTRIES, F-39600 Arbois (FR)
(72) Inventeur: Gomas, Hervé, 77310 Saint Fargeau (FR)
(74) Mandataire: Jacobson, Claude

(56) Documents cités:
- EP-A- 0 208 942
- EP-A- 0 593 906
- EP-A- 0 613 759
- EP-A- 0 635 337
- WO-A-93/16846
- WO-A-93/25354
- DE-U- 9 202 550
- US-A- 5 341 707

## Description

La présente invention est relative à la fabrication des tournevis. Elle concerne en premier lieu une ébauche de tournevis du type comprenant un corps en matière plastique ou élastomère dans lequel est encastrée une lame qui fait saillie vers l'avant, le corps présentant à son extrémité arrière un pommeau relié au reste du corps par un épaulement sensiblement radial (EP-A-635 337, WO-A-93/16846 ou DE-U-92 02 550).

La fabrication des tournevis par deux opérations successives d'injection de matière plastique ou élastomère consiste généralement, dans une machine automatique à plusieurs postes d'injection, à saisir la lame par son extrémité avant; à surmouler un corps d'ébauche, dans un premier moule, sur la partie arrière de la lame, de façon que cette dernière soit encastrée dans ce corps; à transférer l'ébauche ainsi obtenue dans un moule de surmoulage; et à surmouler la couche de finition sur l'ébauche.

On obtient ainsi des résultats satisfaisants car le temps de refroidissement de l'ébauche entre les deux opérations d'injection est parfaitement maîtrisé et constant.

Cependant, il n'en serait pas de même si l'ébauche était stockée pendant un temps indéterminé pour être revêtue ultérieurement, dans des machines séparées, de couches de finition différentes d'une série de tournevis à une autre.

En effet, le retrait de la matière constituant l'ébauche serait alors suffisamment différent d'un ébauche à l'autre pour provoquer fréquemment l'apparition de bavures au droit de l'épaulement du corps d'ébauche lors du surmoulage de la couche de finition.

Or, une telle manière de procéder permettrait d'utiliser un type d'ébauche unique, assurant l'essentiel des fonctions techniques désirées, pour toute une gamme de tournevis, ce qui abaisserait substantiellement le prix de revient de la gamme.

L'invention a pour but de permettre, dans des conditions industriellement satisfaisantes, de réaliser des tournevis ayant des couches de finition différentes à partir d'un type d'ébauche unique.

A cet effet, l'invention a pour objet une ébauche de tournevis du type précité, caractérisée en ce que le corps présente un gradin à l'extrémité radialement extérieure de l'épaulement.

Dans un mode de réalisation, dans sa partie située en avant de l'épaulement, le corps comporte des reliefs permettant l'ancrage en torsion d'une couche de finition surmoulée sur ce corps.

L'invention a également pour objet un tournevis constitué par une ébauche telle que définie ci-dessus, et par une couche de finition surmoulée sur l'ébauche jusqu'à l'épaulement, le tournevis comportant une gorge circulaire entre l'extrémité arrière de cette couche et l'extrémité avant du pommeau.

L'invention a encore pour objet un procédé de fabrication d'un tel tournevis, comprenant les étapes décrites dans la revendication 8.

Dans un mode de réalisation particulier de l'ébauche de tournevis suivant l'invention, le corps présente, immédiatement en avant de l'épaulement une plage sensiblement cylindrique. La plage peut alors comporter des moyens de retenue par frottement d'une bague rapportée, notamment une légère convergence vers l'avant et/ou des bossages en saillie radiale.

L'invention a comme autre objet un tournevis constitué par une telle ébauche, par une bague rapportée disposée sur la plage, sensiblement en butée contre l'épaulement, et par une couche de finition surmoulée sur l'ébauche jusqu'à la bague, le tournevis comportant une gorge circulaire entre l'extrémité arrière de cette bague et l'extrémité avant du pommeau.

L'invention a encore pour objet un procédé de fabrication d'un tel tournevis, suivant la revendication 9.

Un procédé conforme au préambule des revendications 8 et 9 est par exemple décrit dans le WO-A-93/16 846 précité.

L'invention a finalement pour objet une gamme de tournevis comprenant au moins deux tournevis tels que définis ci-dessus, dont les ébauches sont identiques aux tolérances de fabrication près, et qui diffèrent par leurs couches de finition et/ou par la présence ou l'absence d'une bague et/ou par l'aspect de leurs bagues.

Des exemples de mise en oeuvre de l'invention vont maintenant être décrits en regard des dessins annexés, sur lesquels :
- la Figure 1 représente en coupe longitudinale une ébauche de tournevis conforme à l'invention;
- la Figure 2 est une vue prise en coupe suivant la ligne II-II de la Figure 1;
- la Figure 3 est une vue prise en coupe suivant la ligne III-III de la Figure 1;
- la Figure 4 est une demi-vue schématique en coupe longitudinale illustrant une phase finale de fabrication d'un tournevis à partir d'une telle ébauche;
- la Figure 5 est une vue de côté du tournevis correspondant terminé;
- la Figure 6 est une vue analogue à la Figure 4 relative à une variante; et
- la Figure 7 est une vue analogue à la Figure 5 de la variante de tournevis terminé.

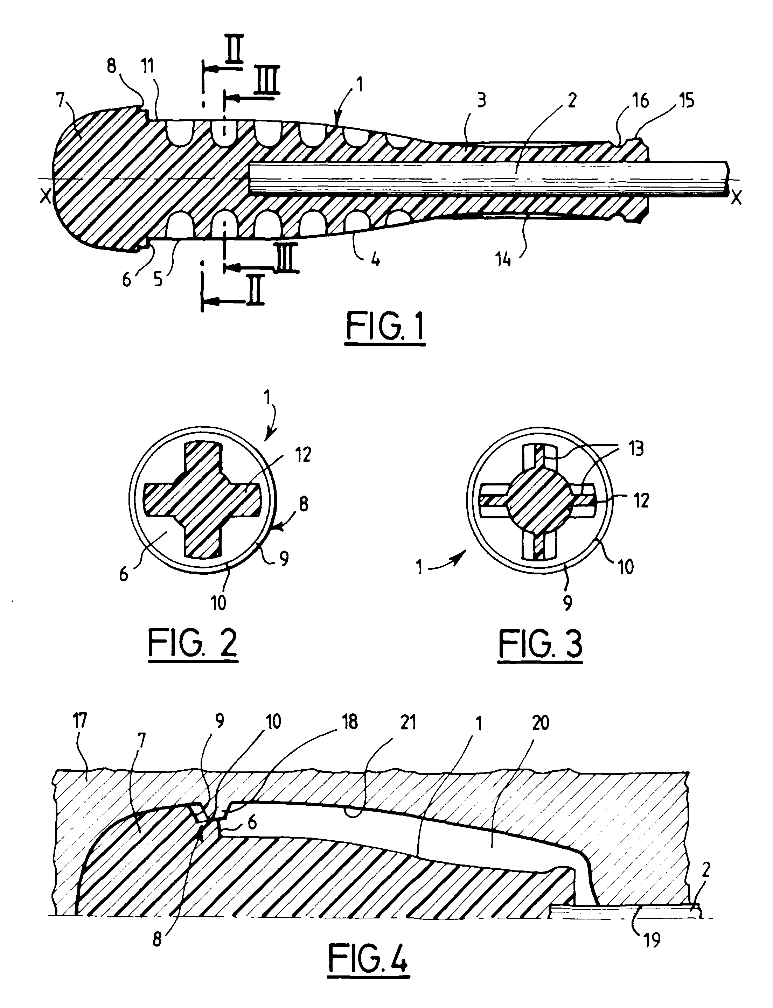

On a représenté aux Figures 1 à 3 une ébauche de tournevis constituée d'un corps d'ébauche 1 dans lequel est encastrée une lame 2, par exemple par surmoulage du corps sur la lame. Cette dernière comporte généralement des parties à section non circulaire (plat d'extrémité arrière, ailettes, etc.) qui assurent son ancrage en rotation dans le corps 1. La lame fait saillie vers l'avant suivant l'axe général X-X de l'ébauche.

Le corps d'ébauche 1 présente, d'avant en arrière, une partie avant 3 de faible diamètre, une première partie intermédiaire 4 qui s'évase progressivement vers l'arrière, puis une seconde partie intermédiaire 5 de diamètre constant qui s'étend jusqu'à un épaulement 6 sensiblement radial. A l'arrière de cet épaulement, le corps forme un pommeau 7 ayant très grossièrement la forme d'une demi-boule. L'extrémité avant de ce pommeau a un diamètre légèrement supérieur au plus grand diamètre de l'épaulement 6, et est reliée au bord radialement extérieur de celui-ci par un gradin 8. Comme le voit mieux sur la Figure 4, où le gradin 8 a été considérablement agrandi, proportionnellement, pour la clarté du dessin, ce gradin comporte une face arrière 9 à peu près radiale mais en dépouille, et une face radialement intérieure 10 cylindrique d'axe X-X. La dimension radiale de la face 9 comme la dimension axiale de la face 10 sont typiquement comprises entre 0,5 mm et 2 mm.

Immédiatement en avant de l'épaulement 6, le corps 1 présente une plage cylindrique continue 11. En avant de cette plage, tout le long des régions intermédiaires 5 et 4, le corps 1 comporte des reliefs d'accrochage d'une couche de finition surmoulée, conçus pour assurer le maintien axial de cette couche ainsi que la transmission du couple de vissage/dévissage. Dans cet exemple, le corps est largement évidé dans ces deux régions, et il n'en subsiste que quatre nervures radiales 12 dont chacune présente sur chaque face latérale une série d'encoches 13. De plus, dans sa partie avant 3, le corps 1 comporte des gougeures longitudinales 14, c'est-à-dire des rainures longitudinales peu profondes, et cette partie 3 s'élargit en un bourrelet d'extrémité avant 15 dans lequel sont prévues des empreintes en creux 16.

La Figure 4 illustre le surmoulage d'une couche de finition en matière plastique ou élastomère sur l'ébauche décrite ci-dessus. Cette ébauche a été représentée très schématiquement, à l'exception de sa partie arrière.

On utilise pour cette opération un moule 17 qui épouse le pommeau 7 et qui comporte un bourrelet annulaire 18 adapté pour pincer de façon étanche la surface 10 du gradin 8 lors de la fermeture du moule. Le moule comporte également, à l'avant, une portée cylindrique 19 adaptée pour enserrer de façon étanche la lame 2, à une courte distance en avant de l'extrémité avant du corps 1. Une cavité de moulage 20 est alors délimitée entre la paroi 21 du moule, la face avant du bourrelet 18, l'épaulement 6, la partie du corps 1 située en avant de ce dernier, et le tronçon de lame 19 intérieur au moule.

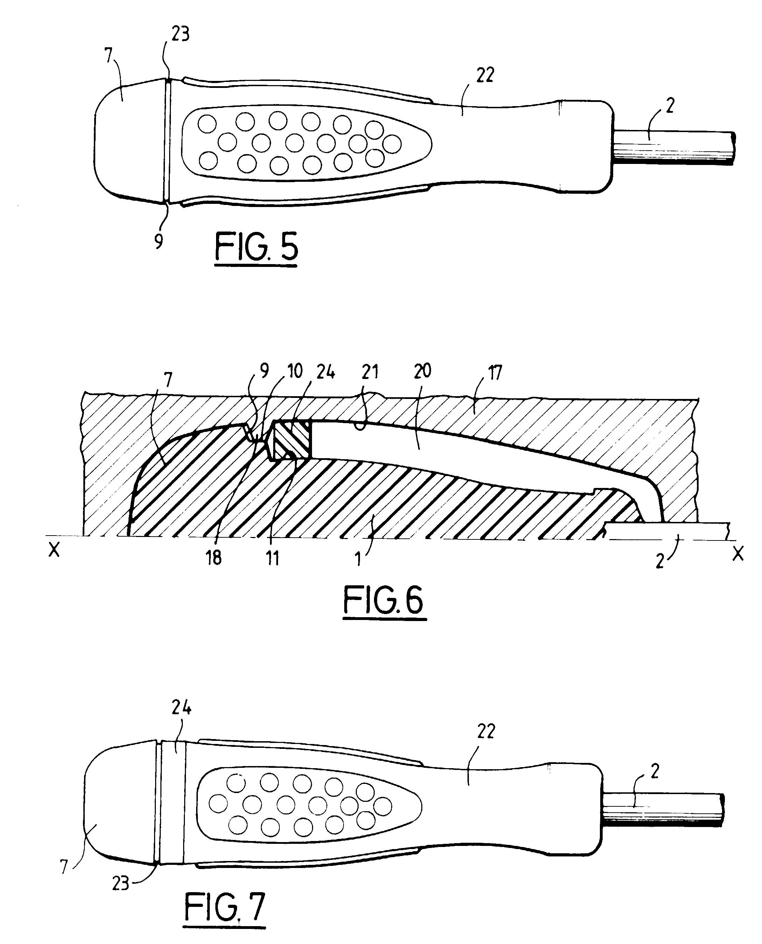

On peut alors injecter dans la cavité 20 une couche de finition 22 constituée d'une matière plastique ou élastomère différente de celle du corps 1. Au démoulage, comme le voit sur la Figure 5, une fine gorge circulaire 23 existe entre la face arrière 9 du gradin 8 et celle de la couche de finition. Si la matière injectée s'est infiltrée entre le bourrelet 18 et la face 10, la bavure correspondante se trouve au fond de la gorge 23 et est donc invisible.

Etant donné que ceci reste vrai quelle que soit la position axiale du bourrelet 18 sur la face 10 du gradin (Figure 4), et donc quelle que soit la dimension axiale réelle de chaque ébauche positionnée dans le moule, on comprend que l'on peut "habiller" les ébauches avec des couches de finition de différents aspects (forme superficielle, couleur) même après avoir stocké les ébauches pendant un temps indéterminé avant l'opération de surmoulage.

En variante (Figure 6), on peut, avant de fermer le moule, enfiler sur la plage cylindrique 11 une bague préformée 24, sensiblement jusqu'à sa butée contre l'épaulement 6. On prévoit de préférence sur cette plage des bossages en saillie, et/ou une légère conicité convergente vers l'avant, afin de permettre de positionner la bague 24 par frottement. Le moule 17 est alors conformé pour enserrer de façon étanche la bague 24 en même temps que la surface 10 du gradin 8.

Le surmoulage de la couche de finition 22 s'effectue ensuite comme précédemment, et l'on obtient un tournevis tel que représenté sur la Figure 7, avec la face radialement extérieure de la bague 24 apparente et séparée du pommeau 7 par la gorge 23. De nouveau, les éventuelles bavures de surmoulage se trouvent au fond de cette gorge et sont invisibles.

On peut obtenir ainsi industriellement, de façon très satisfaisante, à partir d'un type unique d'ébauche, une gamme très variée de tournevis, différant les uns des autres par l'aspect de la couche de finition 22 (forme et/ou couleur), la présence ou l'absence d'une bague 24 et l'aspect (longueur, couleur, aspect de surface, marquage) de cette bague.

## Revendications

1. Ebauche de tournevis, du type comprenant un corps (1) en matière plastique ou élastomère dans lequel est encastrée une lame (2) qui fait saillie vers l'avant, le corps présentant à son extrémité arrière un pommeau (7) relié au reste du corps par un épaulement (6) sensiblement radial, caractérisée en ce que le corps (1) présente un gradin (8) à l'extrémité radialement extérieure de l'épaulement (6).

2. Ebauche de tournevis suivant la revendication 1, caractérisée en ce que, dans sa partie située en avant de l'épaulement (6), le corps (1) comporte des reliefs (12, 13) permettant l'ancrage en torsion d'une couche de finition (22) surmoulée sur ce corps.

3. Ebauche de tournevis suivant la revendication 1 ou 2, caractérisée en ce que le corps (1) présente, immédiatement en avant de l'épaulement (6), une plage (11) sensiblement cylindrique.

4. Ebauche de tournevis suivant la revendication 3, caractérisée en ce que la plage (11) comporte des moyens de retenue par frottement d'une bague rapportée (24), notamment une légère convergence vers l'avant et/ou des bossages en saillie radiale.

5. Tournevis constitué par une ébauche suivant l'une quelconque des revendications 1 à 4, et par une couche de finition (22) surmoulée sur l'ébauche jusqu'à l'épaulement (6), le tournevis comportant une gorge circulaire (23) entre l'extrémité arrière de cette couche et l'extrémité avant du pommeau (7).

6. Tournevis constitué par une ébauche suivant la revendication 3 ou 4, par une bague rapportée (24) disposée sur la plage (11), sensiblement contre l'épaulement (6), et par une couche de finition (22) surmoulée sur l'ébauche jusqu'à la bague, le tournevis comportant une gorge circulaire (23) entre l'extrémité arrière de cette bague et l'extrémité avant du pommeau (7).

7. Gamme de tournevis comprenant au moins deux tournevis suivant la revendication 5 ou 6 dont les ébauches sont identiques aux tolérances de fabrication près, et qui diffèrent par leurs couches de finition (22) et/ou par la présence ou l'absence d'une bague (24) et/ou par l'aspect de leurs bagues (24).

8. Procédé de fabrication d'un tournevis suivant la revendication 5, du type comprenant les étapes suivantes :
(a) on réalise une ébauche;
(b) on positionne cette ébauche dans un moule (17) qui définit une cavité de surmoulage (20) autour de l'ébauche; et
(c) on injecte la couche de finition (22) dans la cavité de surmoulage (20),
caractérisé en ce qu'on utilise une ébauche suivant l'une quelconque des revendications 1 à 4, et un moule qui présente un bourrelet annulaire (18) de pincement de l'ébauche au niveau de son gradin (8) et qui définit la cavité de surmoulage en avant de ce bourrelet annulaire.

9. Procédé de fabrication d'un tournevis suivant la revendication 6, du type comprenant les étapes suivantes :
(a) on réalise une ébauche;
(b) on positionne cette ébauche dans un moule (17) qui définit une cavité de surmoulage (20) autour de l'ébauche; et
(c) on injecte la couche de finition (22) dans la cavité de surmoulage (20),
caractérisé en ce que :
- on utilise une ébauche suivant la revendication 3 ou 4, et un moule qui présente un bourrelet annulaire (18) de pincement de l'ébauche au niveau de son gradin (8), ainsi qu'une surface de serrage radial de la bague (24), le moule définissant une cavité de surmoulage (20) en avant de cette bague; et
- on enfile la bague (24) sur la plage (11) sensiblement contre l'épaulement (6) avant de positionner l'ébauche dans le moule.

## Patentansprüche

1. Schraubendreherrohling vom Typ mit einem Körper (1) aus einem Kunststoff- oder Elastomermaterial, in dem ein sich nach vorne vorstehendes Blatt (2) eingebettet ist, wobei der Körper an seinem hinteren Ende einen Knauf (7) aufweist, der mit dem Rest des Körpers durch einen im Wesentlichen radialen Bund (6) verbunden ist,
dadurch gekennzeichnet, dass der Körper (1) an der radialen Außenseite des Bundes (6) eine Stufe (8) aufweist.

2. Schraubendreherrohling nach Anspruch 1,
dadurch gekennzeichnet, dass der Körper (1) in seinem vor dem Bund (6) angeordneten Abschnitt Erhebungen (12, 13) aufweist, die die Torsions-Verankerung einer auf den Körper gegossenen Endbeschichtung (22) ermöglichen.

3. Schraubendreherrohling nach Anspruch 1 oder 2,
dadurch gekennzeichnet, dass der Körper (1) unmittelbar vor dem Bund (6) einen im Wesentlichen zylindrischen Bereich (11) aufweist.

4. Schraubendreherrohling nach Anspruch 3,
dadurch gekennzeichnet, dass der Bereich (11) eine auf Reibung eines angesetzten Rings (24) basierende Rückhaltevorrichtung aufweist, mit insbesondere einer leichten Konvergenz nach vorne und/oder radial vorstehenden Vorsprüngen.

5. Schraubendreher, der aus einem nach einem der Ansprüche 1 bis 4 gebildeten Schraubendreherrohling und mit einer bis an den Bund (6) auf den Schraubendreherrohling aufgegossenen Endbeschichtung (22) besteht, wobei der Schraubendreher eine kreisförmige Einkerbung (23) zwischen dem hinteren Ende der Beschichtung und dem Ende vor dem Knauf (7) aufweist.

6. Schraubendreher, der aus einem Schraubendreherrohling nach Anspruch 3 oder 4, aus einem in dem Bereich (11) im Wesentlichen gegen den Bund (6) angeordneten angesetzten Rückhaltering (24) und aus einer auf den Rohling bis zu dem Ring aufgegossenen Endbeschichtung (22) gebildet ist, wobei der Schraubendreher eine kreisförmige Einkerbung (23) zwischen dem hinteren Ende des Rings und dem Außenrand vor dem Knauf (7) aufweist.

7. Schraubendrehersatz mit mindestens zwei Schraubendrehern nach Anspruch 5 oder 6, deren Rohlinge bis auf Fabrikationstoleranzen identisch sind und die sich durch ihre Endbeschichtung (22) und/oder durch das Vorliegen oder Fehlen eines Rings (24) und/oder durch die Gestalt ihrer Ringe (24) unterscheiden.

8. Verfahren zur Herstellung eines Schraubendrehers gemäß Anspruch 5 mit den folgenden Verfahrensschritten:
(a) Herstellung eines Rohlings;
(b) Anordnen des Rohlings in einer Gußform (17), die einen Guß-Hohlraum (20) um den Rohling definiert; und
(c) Einspritzen der Endbeschichtung (22) in den Guß-Hohlraum (20),
dadurch gekennzeichnet, dass ein Rohling gemäß einem der Ansprüche 1 bis 4 und eine Gußform verwendet wird, die einen ringförmigen Wulst (18) zum Festklemmen des Rohlings auf Höhe seiner Stufe (8) aufweist und die den Guß-Hohlraum vor diesem ringförmigen Wulst definiert.

9. Verfahren zur Herstellung eines Schraubendrehes nach Anspruch 6 mit den folgenden Verfahrensschritten:
(a) Herstellung eines Rohlings;
(b) Anordnen des Rohlings in einer Gußform (17), die einen Guß-Hohlraum (20) um den Rohling definiert; und
(c) Einspritzen der Endbeschichtung (22) in den Guß-Hohlraum (20),
gekennzeichnet durch:
- die Verwendung eines Rohlings nach Ansprch 3 oder 4 und einer Gußform, die einen ringförmigen Wulst (18) zum Festklemmen des Rohlings auf Höhe seiner Stufe (8) sowie eine Fläche zum radialen Anpressen des Rings (24) aufweist, wobei die Gußform einen Guß-Hohlraum (20) vor diesem Ring definiert; und
- Anordnen des Rings (24) auf dem Bereich (11) von im Wesentlichen gegen den Bund (6), bevor der Rohling in der Gußform plaziert wird.

## Claims

1. Screwdriver blank, of the type comprising a body (1) of plastics or elastomer material in which is embedded a blade (2) which protrudes forwards, the body having at its rear end a knob (7) which is connected to the rest of the body by a substantially radial shoulder (6), characterised in that the body (1) has a step (8) at the radially outer end of the shoulder (6).

2. Screwdriver blank according to claim 1, characterised in that, at the portion which is located in front of Lhe shoulder (6), the body (1) comprises raised portions (12, 13) which allow fixing with torsion of a finishing coating (22) which is moulded onto the body.

3. Screwdriver blank according to claim 1 or claim 2, characterised in that the body (1) has, immediately in front of the shoulder (6), a substantially cylindrical region (11).

4. Screwdriver blank according to claim 3, characterised in that the region (11) comprises frictional holding means for a separate ring (24), in particular a slight convergence at the front and/or radially projecting bosses.

5. Screwdriver constituted by a blank according to any one of claims 1 to 4, and by a finishing coating (22) which is moulded onto the blank as far as the shoulder (6), the screwdriver comprising a circular recess (23) between the rear end of that coating and the front end of the knob (7).

6. Screwdriver constituted by a blank according to claim 3 or claim 4, by a separate ring (24) which is arranged on the region (11), substantially against the shoulder (6), and by a finishing coating (22) which is moulded onto the blank as far as the ring, the screwdriver comprising a circular recess (23) between the rear end of that ring and the front end of the knob (7).

7. Set of screwdrivers comprising at least two screwdrivers according to claim 5 or claim 6, whose blanks are identical to within manufacturing tolerances and which differ in terms of their finishing coatings (22) and/or the presence or absence of a ring (24) and/or the appearance of their rings (24).

8. Method for manufacturing a screwdriver according to claim 5, of the type comprising the following stages;
(a) a blank is produced:
(b) the blank is positioned in a mould (17) which defines a moulding cavity (20) around the blank; and
(c) the finishing coating (22) is injected into the moulding cavity (20),
characterised in that a blank according to any one of claims 1 to 4 and a mould, which has an annular bulb (18) for squeezing the blank in the region of the step (8) thereof and which defines the moulding cavity in front of that annular bulb, are used.

9. Method for manufacturing a screwdriver according to claim 6, of the type comprising the following stages:
(a) a blank is produced;
(b) the blank is positioned in a mould (17) which defines a moulding cavity (20) around the blank; and
(c) the finishing coating (22) is injected into the moulding cavity (20),
characterised in that:
- a blank according to claim 3 or claim 4 and a mould, which has an annular bulb (18) for squeezing the blank in the region of the step (8) thereof, as well as a surface for radially tightening the ring (24), are used, the mould defining a moulding cavity (20) in front of that ring; and
the ring (24) is joined to the region (11) substantially against the shoulder (6) before the blank is positioned in the mould.
